# FASCICULE DE BREVET EUROPEEN

(11) **EP 2 761 329 B1**
(45) Date de publication et mention de la délivrance du brevet: **13.01.2016**
(21) Numéro de dépôt: 12745502.0
(22) Date de dépôt: 24.07.2012
(51) Int. Cl.: G01V 1/28, G01V 99/00

(54) **PROCEDE DE VALIDATION D'IMAGE D'ENTRAINEMENT POUR LA MODELISATION GEOSTATISTIQUE MULTIPOINT DU SOUS-SOL**
VERFAHREN ZUR ÜBERPRÜFUNG EINES TRAININGSBILDES ZUR GEOSTATISTISCHEN MEHRPUNKTMODELLIERUNG DES UNTERGRUNDES
METHOD FOR VALIDATING A TRAINING IMAGE FOR THE MULTIPOINT GEOSTATISTICAL MODELING OF THE SUBSOIL

(30) Priorité: 30.09.2011 US 201161541260 P
(43) Date de publication de la demande: 06.08.2014
(73) Titulaire: Total SA, 92400 Courbevoie (FR)
(72) Inventeur: RONOT, Cyril, F-64000 Pau (FR); RUELLAND, Philippe, F-64000 Pau (FR); BIVER, Pierre, F-64000 Pau (FR)
(74) Mandataire: Cabinet Plasseraud
(86) Numéro de dépôt international: PCT/FR2012/051758
(87) Numéro de publication internationale: WO 2013/045776

(56) Documents cités:
- JEFF B BOISVERT ET AL: "Multiple-Point Statistics for Training Image Selection", NATURAL RESOURCES RESEARCH, KLUWER ACADEMIC PUBLISHERS-PLENUM PUBLISHERS, NE, vol. 16, no. 4, 31 janvier 2008 (2008-01-31), pages 313-321, XP019578902, ISSN: 1573-8981

## Description

La présente invention concerne les techniques géostatistiques multipoint utilisées pour construire des modèles géologiques pour représenter des zones du sous-sol.

Les modèles géologiques sont des outils très utiles à l'étude du sous-sol, en particulier pour l'exploration ou l'exploitation de champs d'hydrocarbures. On essaie de construire un modèle géologique représentant au mieux la structure et le comportement d'un réservoir à partir de mesures effectuées soit en surface (notamment des mesures sismiques) soit dans des puits (logs), ou encore à partir d'observations faites sur des carottes prélevées dans les puits. Bien entendu, même lorsqu'il est effectué de grandes quantités de mesures et de prélèvements, la construction d'un modèle tridimensionnel traduisant très fidèlement la structure et le comportement de la zone étudiée du sous-sol n'est pas un objectif réaliste. C'est pourquoi on a recours à des méthodes statistiques pour la construction de ces modèles.

Les méthodes géostatistiques traditionnelles reposent sur l'utilisation de variogrammes qui sont des mesures de variabilité spatiale à deux points. Ces méthodes traditionnelles sont très limitées, notamment quant à leur capacité à représenter la topologie parfois complexe de la zone étudiée. Les méthodes multipoint ont été proposées à partir des années 1990 pour surmonter ces limitations.

Les techniques statistiques multipoint (MPS, "Multi-Point Statistics") permettent de modéliser les hétérogénéités géologiques de telle façon qu'on puisse reproduire des systèmes naturels en rendant mieux compte des incertitudes du modèle.

Les données d'entrée des techniques de simulation MPS incluent des images d'entraînement dont le choix joue un rôle important dans la fiabilité du modèle obtenu. Une image d'entraînement est définie sur une grille tridimensionnelle (3D). Elle est choisie de manière à représenter des motifs d'hétérogénéités géologiques qu'on peut s'attendre à rencontrer dans le réservoir (voir S. Strebelle, "Conditional Simulation of Complex Geological Structures Using Multiple-Point Statistics". Mathematical Geology, Vol. 34, No. 1, 2002, pp. 1-21).

Dans les débuts des techniques MPS, on utilisait une image d'entraînement stationnaire formant une représentation conceptuelle d'un système sédimentaire, obtenue à partir d'un croquis établi par un géologue ou à partir d'une simulation à base d'objets. Des algorithmes plus récents ont permis d'effectuer des simulations MPS en utilisant des images d'entraînement non-stationnaires, en combinant celles-ci avec des images d'entraînement auxiliaires (voir T.L. Chugunova & L.Y. Hu, "Multiple-Point Simulations Constrained by Continuous Auxiliary Data", Mathematical Geosciences, Vol. 40, No. 2, 2008, pp. 133-146).

Les images d'entraînement peuvent notamment correspondre à une représentation simplifiée d'un analogue contemporain, obtenue par une technique de traitement d'image appliquée à des photographies prises par satellite dans une région du globe qui, de l'avis d'experts géologues, présente des caractéristiques similaires à celles de la région où se sont autrefois formés les dépôts sédimentaires se trouvant dans la zone étudiée du sous-sol. Par exemple, différentes images satellite sont traitées puis empilées pour former une représentation tridimensionnelle qui servira d'image d'entraînement.

Très souvent, l'étude d'une zone géologique particulière comporte le forage d'un ou plusieurs puits dans cette zone pour y effectuer des mesures (logs) et/ou des prélèvements. Il est alors possible de vérifier si l'image d'entraînement 3D semble cohérente avec les données de puits disponibles, afin de valider l'image d'entraînement ou d'indiquer qu'elle devrait être modifiée. En effet, une image d'entraînement qui ne serait pas cohérente avec les données de puits est susceptible de fournir une mauvaise représentation des hétérogénéités durant la simulation.

Des méthodes applicables à la validation des hétérogénéités verticales sur des images d'entraînement ont été proposées par J.B. Boisvert, J. Pyrcz et C.V. Deutsch, "Multiple-Point Statistics for Training Image Selection", Natural Resources Research, Vol. 16, No. 4, décembre 2007, pp. 313-320. Des statistiques multipoint telles que la fonction de densité multipoint (MPDF, "Multi-Point Density Function") sont calculées selon une dimension d'après les données de puits et sur l'image d'entraînement. S'il y a une bonne concordance entre les deux fonctions MPDF, on en déduit que l'image d'entraînement est cohérente avec les données de puits.

Un but de la présente invention est d'enrichir les méthodes de génération et de validation d'images d'entraînement. Il est notamment souhaitable de pouvoir valider une image d'entraînement par rapport à des données de puits sans se limiter à des estimations statistiques parallèlement à un puits.

Selon invention, il est proposé un procédé de préparation d'une image d'entraînement pour la modélisation d'une zone du sous-sol par une technique géostatistique multipoint. Ce procédé comprend:
- construire une image d'entraînement sur une première grille de cellules tridimensionnelle, l'image d'entraînement donnant, pour chaque cellule de la première grille tridimensionnelle, un type respectif de faciès géologique affecté à cette cellule; et
- vérifier la représentativité de l'image d'entraînement par rapport à des données de puits obtenues à partir d'observations faites dans plusieurs puits qui ont été forés dans la zone du sous-sol, les données de puits faisant référence à une seconde grille de cellules tridimensionnelle dont la morphologie est adaptée à des horizons géologiques estimés dans la zone du sous-sol, les données de puits incluant des types de faciès géologique respectivement estimés d'après les observations pour des cellules de la seconde grille tridimensionnelle situées le long des puits.

La vérification de représentativité de l'image d'entraînement par rapport aux données de puits comporte une vérification inter-puits qui comprend:
- identifier des motifs bidimensionnels dans les données de puits, chaque motif bidimensionnel étant défini le long d'un horizon géologique respectif et incluant, dans une cellule contenant l'intersection d'un puits avec ledit horizon géologique dans la seconde grille tridimensionnelle, le type de faciès géologique estimé pour cette cellule; et
- compter, dans l'image d'entraînement, les occurrences des motifs bidimensionnels identifiés.

La vérification de représentativité de l'image d'entraînement par rapport aux données de puits n'est pas limitée à une vérification verticale. Une vérification latérale est opérée pour exploiter l'information fournie par les corrélations d'un puits à un autre, grâce à une analyse reposant sur des motifs bidimensionnels pouvant être identifiés pour des groupes de M puits voisins, M étant un nombre choisi supérieur à 1. On augmente aussi ainsi la probabilité que le modèle qui sera généré par la technique MPS représente convenablement la zone étudiée du sous-sol.

La vérification inter-puits peut comprendre une validation de l'image d'entraînement lorsque le nombre des occurrences comptées des motifs bidimensionnels identifiés dépasse un seuil, lequel seuil peut être exprimé proportionnellement au nombre de positions possibles du motif bidimensionnel dans l'image d'entraînement.

Dans une réalisation, chaque motif bidimensionnel, défini pour des puits croisant un horizon géologique, est repéré par la position de la cellule de la seconde grille tridimensionnelle contenant le barycentre de ces puits le long de l'horizon géologique considéré. Le comptage, dans l'image d'entraînement, des occurrences d'un motif bidimensionnel repéré par la position d'une cellule de barycentre peut alors comprendre:
- balayer l'image d'entraînement, chaque étape du balayage plaçant le motif bidimensionnel sur la première grille tridimensionnelle en alignant la cellule contenant le barycentre des puits sur une cellule de référence de la première grille tridimensionnelle et les cellules du motif bidimensionnel contenant respectivement les intersections entre les puits et l'horizon géologique sur des cellules-cible de la première grille tridimensionnelle; et
- incrémenter un compteur chaque fois qu'une étape du balayage fait coïncider les types de faciès estimés pour les cellules du motif bidimensionnel avec les types de faciès respectivement affectés aux cellules-cible dans l'image d'entraînement.

La vérification de représentativité de l'image d'entraînement par rapport aux données de puits peut être complétée par une vérification intra-puits comprenant:
- estimer une mesure statistique multipoint, telle qu'une une fonction de densité multipoint (MPDF) ou une distribution de séries ("distribution of runs"), le long de chaque puits parmi les données de puits;
- estimer la même mesure statistique multipoint le long de colonnes verticales de la première grille de cellules tridimensionnelle; et
- comparer les deux mesures statistiques multipoint estimées.

Un autre aspect de la présente invention se rapporte à un système de traitement de données adapté à la préparation d'une image d'entraînement pour la modélisation d'une zone du sous-sol par une technique géostatistique multipoint. Le système comprend des ressources informatiques configurées pour mettre en oeuvre un procédé tel que défini ci-dessus.

Un autre aspect encore de la présente invention se rapporte à un programme d'ordinateur pour un système de traitement de données, le programme comprenant des instructions pour mettre en oeuvre un procédé tel que défini ci-dessus lorsqu'il est exécuté sur une unité de calcul du système de traitement de données. Un support d'enregistrement lisible par ordinateur, sur lequel est enregistré un tel programme est également proposé.

D'autres particularités et avantages de la présente invention apparaîtront dans la description ci-après d'un exemple de réalisation non limitatif, en référence aux dessins annexés, dans lesquels :
- les figures 1 et 2 sont des illustrations schématiques d'une grille régulière et d'une grille réservoir, respectivement;
- la figure 3 est un organigramme d'un exemple de réalisation d'un procédé selon l'invention;
- les figures 4A-4E montre des exemples d'images satellite prétraitées pour l'assemblage d'une image d'entraînement à trois dimensions;
- les figures 5 à 7 sont des schémas illustrant l'assemblage de l'image d'entraînement 3D;
- les figures 8A-B sont des diagrammes illustrant un premier exemple de mesure statistique multipoint;
- la figure 9 est un diagramme illustrant un second exemple de mesure statistique multipoint;
- la figure 10 illustre une manière de vérifier la représentativité de l'image d'entraînement par rapport à des données de puits;
- la figure 11 est une autre illustration de la vérification de représentativité de l'image d'entraînement par rapport aux données de puits;
- la figure 12 est un organigramme un exemple de procédure applicable dans une vérification inter-puits d'une image d'entraînement;
- les figures 13 à 15 sont des schémas illustrant une technique permettant de prendre en compte des informations de connectivité entre puits dans l'initialisation d'une simulation MPS; et
- la figure 16 est un organigramme montrant une façon de mettre en oeuvre la technique illustrée par les figures 13-15.

Les techniques de statistique multipoint (MPS) se sont développées au cours des vingt dernières années. Les faciès de la zone géologique considérée sont modélisés pixel par pixel sur une grille de cellules tridimensionnelle dont la morphologie est adaptée aux horizons géologiques dans la zone à modéliser. Cette grille 3D est appelée grille réservoir. La simulation MPS affecte à chaque pixel de la grille réservoir une valeur de faciès, par exemple un nombre entier, correspondant à une codification de quelques types de faciès qu'on s'attend à trouver dans la zone à modéliser. Par exemple, dans un environnement fluviatile, les types de faciès peuvent être chenal, plaine alluviale, dépôt sableux, ébrasement de crevasse, etc.

La mise en oeuvre d'une technique MPS nécessite de disposer d'une image d'entraînement 3D dont le contenu statistique soit représentatif de la zone à modéliser. Cette image d'entraînement est typiquement définie sur une première grille de cellules tridimensionnelle de forme régulière, et contient de l'information statistique sur les faciès sédimentaires à l'échelle des corps géologiques ("geobody").

La simulation MPS peut consister à balayer l'image d'entraînement à l'aide d'une fenêtre rectangulaire, à y repérer les différentes configurations de faciès rencontrées et à les organiser en une liste ou un arbre de recherche. Ensuite, à partir des cellules initialement renseignées de la grille réservoir (par exemple d'après des prélèvements effectués dans des puits), l'algorithme parcourt la grille réservoir et récupère les configurations compatibles dans l'arbre de recherche puis tire des valeurs de faciès issues de ces configurations selon leur fonction de distribution probabiliste. Il construit ainsi de proche en proche un modèle de réservoir dont les corrélations spatiales de faciès sont statistiquement semblables à celles de l'image d'entraînement.

Bien entendu, la qualité de la modélisation dépend fortement de la capacité de l'image d'entraînement à représenter convenablement la statistique de la zone modélisée.

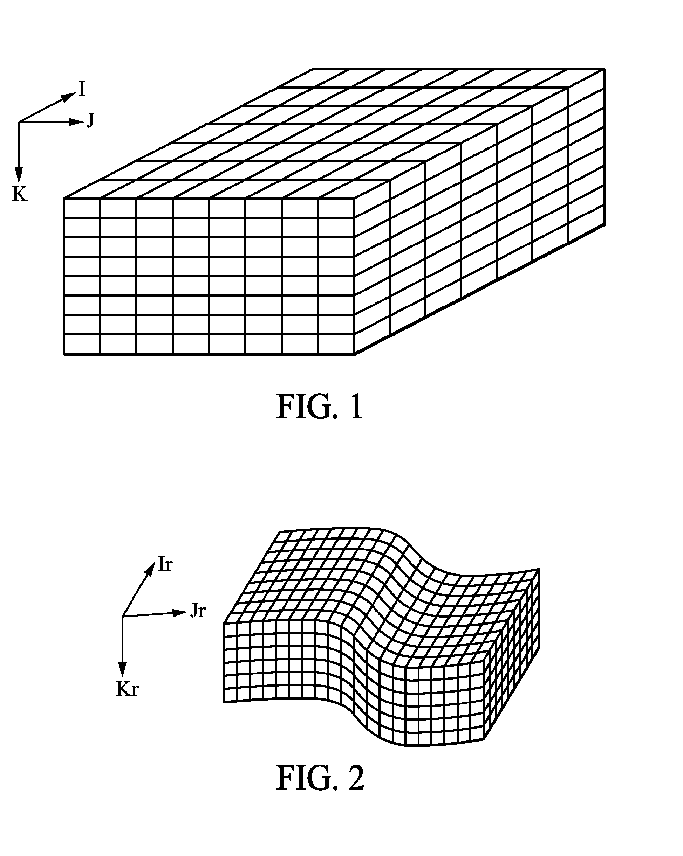

Une grille régulière de cellules telle qu'illustrée sur la figure 1 est une matrice tridimensionnelle en forme de parallélépipède rectangle contenant un certain nombre de cellules en forme de parallélépipède rectangle de même taille. Chaque cellule est référencée par sa position dans un repère I, J, K, où I et J sont des index horizontaux et K représente un index de couche dans un ensemble de couches superposées selon la direction verticale.

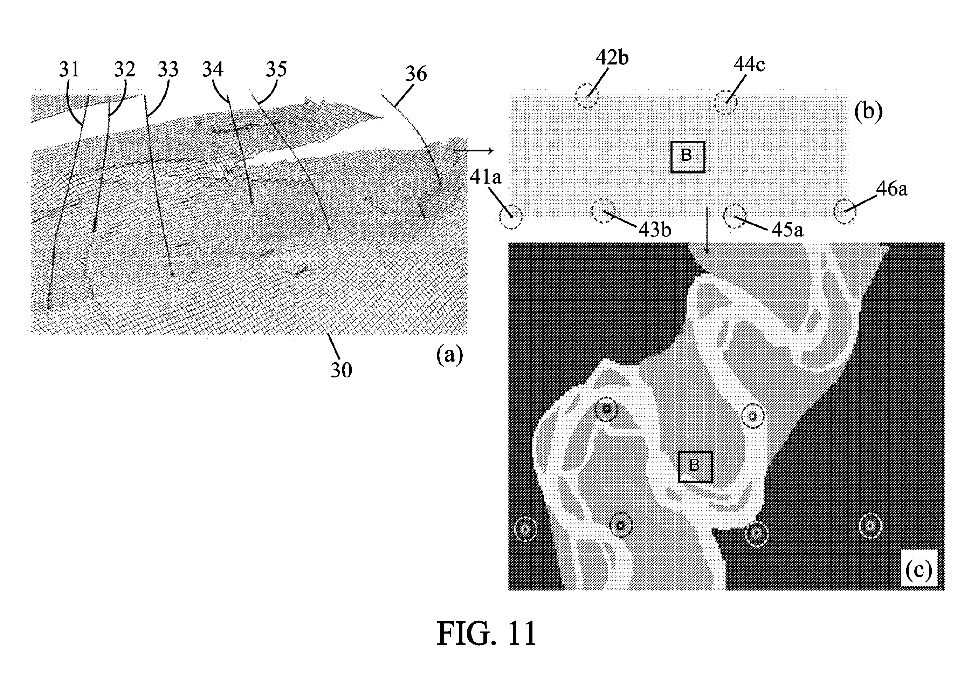

Une grille réservoir (figure 2) est une grille 3D dont la topologie reproduit celle d'un réservoir situé dans une zone du sous-sol. La forme de la grille réservoir est définie par des horizons qui ont été relevés sur des images sismiques à deux ou trois dimensions. Les techniques de pointage d'horizons sismiques dans des images sismiques 2D ou 3D sont bien connues. Les horizons correspondent à des surfaces du sous-sol où on observe un fort contraste d'impédance sismique. Les horizons sont liés à des changements de lithologie et correspondent souvent à des plans de stratification. L'activité tectonique de la Terre a déformé ces surfaces initialement plates, et y a formé des failles et/ou des plis. La grille réservoir, utilisant ces surfaces comme cadre, prend en compte les structures géologiques. Les cellules de la grille réservoir sont référencées par leur position dans un repère Ir, Jr, Kr, où Kr représente un index de couche et Ir, Jr des index de position des cellules à l'intérieur de chaque couche. La figure 2 montre un exemple relativement simple de déformation dans une grille réservoir. Dans la pratique, les couches ont souvent des déformations plus complexes, comme par exemple celles de la couche représentée sur la figure 11 (a).

En général, le nombre de couches dans la grille de l'image d'entraînement est inférieur au nombre de couches dans la grille réservoir.

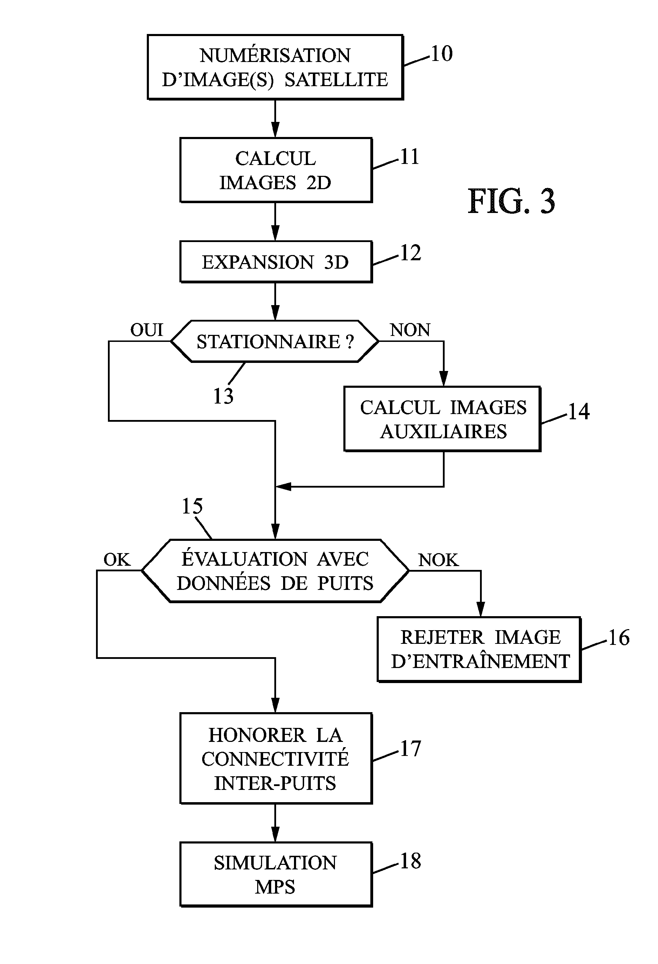

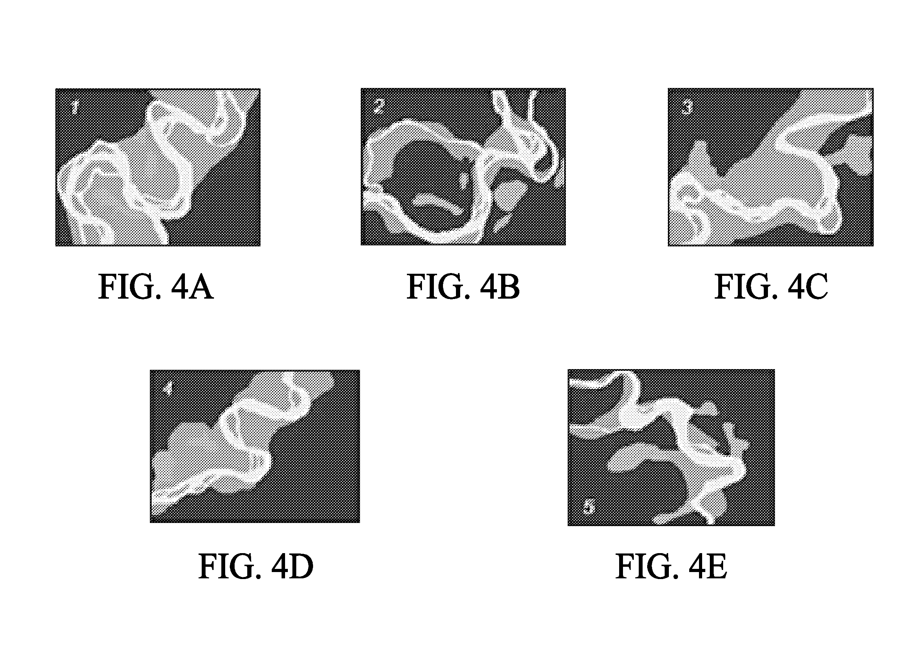

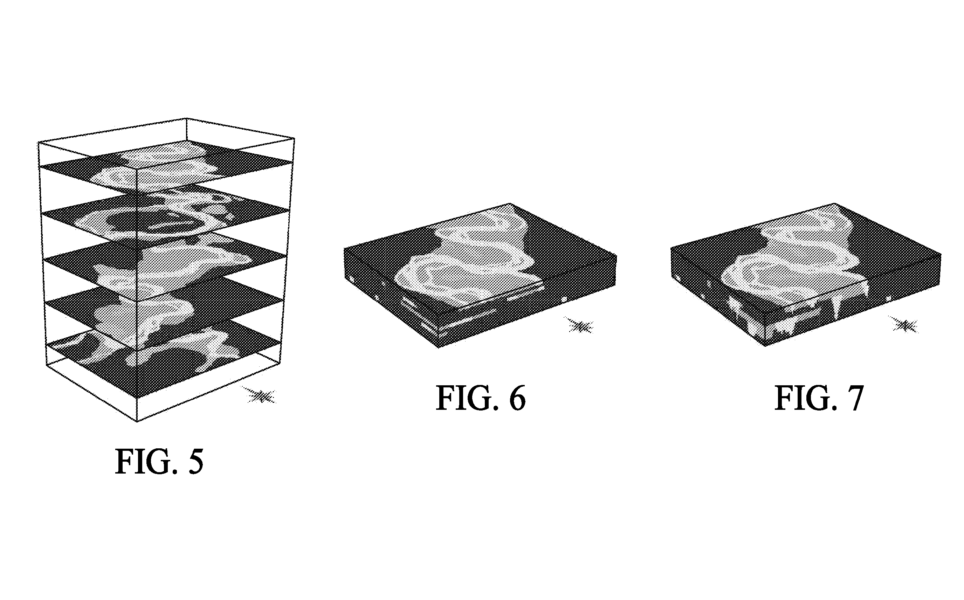

Un mode de réalisation du procédé de préparation de l'image entraînement en vue de la simulation MPS de la zone du sous-sol est présenté en référence à la figure 3. Dans un premier temps (étapes 10-11), des images 2D sont obtenues, comme par exemple celles illustrées sur les figures 4A-E. Puis une étape 12 d'expansion 3D est exécutée pour assembler une image entraînement, comme illustré par les figures 5-7.

Dans l'exemple de la figure 3, l'obtention des images 2D commence par la numérisation 10 d'images satellite qui ont été prises dans une région appropriée du globe. Cette région est choisie par des experts géologues pour sa similitude supposée, en termes de comportement sédimentaire, avec celle où la zone géologique étudiée s'est formée.

La numérisation semi-automatique d'images satellite par des techniques de traitement d'image permet d'extraire rapidement les parties d'une photographie qui sont significatives en termes de corps de dépôt sédimentaire. Ces techniques de traitement d'image reposent sur des algorithmes tels que la détection de bords de Canny (J. Canny, "A Computational Approach to Edge Detection", IEEE Transactions on Pattern Analysis and Machine Intelligence, Vol. PAMI-8, No. 6, novembre 1986, pp. 679-698) ou la segmentation par une transformation de partage d'eau ("watershed transform") (J. Roerdink & A. Meijster, "The Watershed Transform: Definitions, Algorithms and Parallelization Strategies", Fundamenta Informaticae, Vol. 41, 2002, pp. 187-228). Une grille 2D est créée et remplie avec des valeurs discrètes de faciès interprétées d'après les images satellite à l'aide d'un algorithme de traitement d'image tel que mentionné ci-dessus.

À l'étape 12, les images 2D numérisées sont empilées selon la direction verticale (figure 5). Il en résulte (figure 6) une image 3D à laquelle un autre traitement, pouvant faire appel à un algorithme à base de pseudo-processus, est appliqué pour extrapoler la forme de corps géologiques 3D. On obtient ainsi une image d'entraînement 3D, telle que celle illustrée par la figure 7, comportant par exemple de l'ordre de 3 à 5 couches selon la direction verticale K et quelques centaines de cellules selon chaque direction horizontale I, J.

Cette image d'entraînement est testée à l'étape 13 pour vérifier sa stationnarité, c'est-à-dire si elle présente une uniformité spatiale en termes d'orientation ou de proportion de faciès. Si l'image n'est pas stationnaire, des images d'entraînement auxiliaires représentant les tendances spatiales sont générées à partir de l'image d'entraînement. Les images d'entraînement auxiliaires peuvent inclure des dérives concernant les proportions de faciès, les azimuts, les tailles de corps géologiques. Elles sont construites de manière semi-automatique à l'étape 14, par exemple selon la technique décrite dans l'article précité de T.L. Chugunova & L.Y. Hu, et permettront ensuite d'effectuer la simulation MPS à l'étape 18 malgré la non-stationnarité de l'image entraînement.

À l'étape 15 de la figure 3, l'image d'entraînement 3D générée à l'étape 13 est évaluée par rapport à des données disponibles au niveau d'un ou plusieurs puits qui ont forés dans la zone du réservoir et dans lesquels des mesures et prélèvements ont été effectués. Un certain nombre de critères de cohérence statistique entre l'image d'entraînement et les données de puits sont évalués. Si un ou plusieurs de ces critères sont mal vérifiés, l'image d'entraînement est rejetée à l'étape 16, et une autre image d'entraînement sera générée, par exemple en modifiant l'image d'entraînement précédente ou en recommençant selon une méthode 10-14 semblable à celle décrite ci-dessus. Cette autre image d'entraînement sera testée à nouveau jusqu'à ce qu'on obtienne une image d'entraînement satisfaisante au regard des critères évalués. Une autre possibilité à l'issue de l'étape 15 consiste à présenter à l'utilisateur les résultats d'évaluation des critères pris en compte, pour laisser l'utilisateur décider au vu des résultats si l'image d'entraînement peut être acceptée ou non pour la simulation MPS.

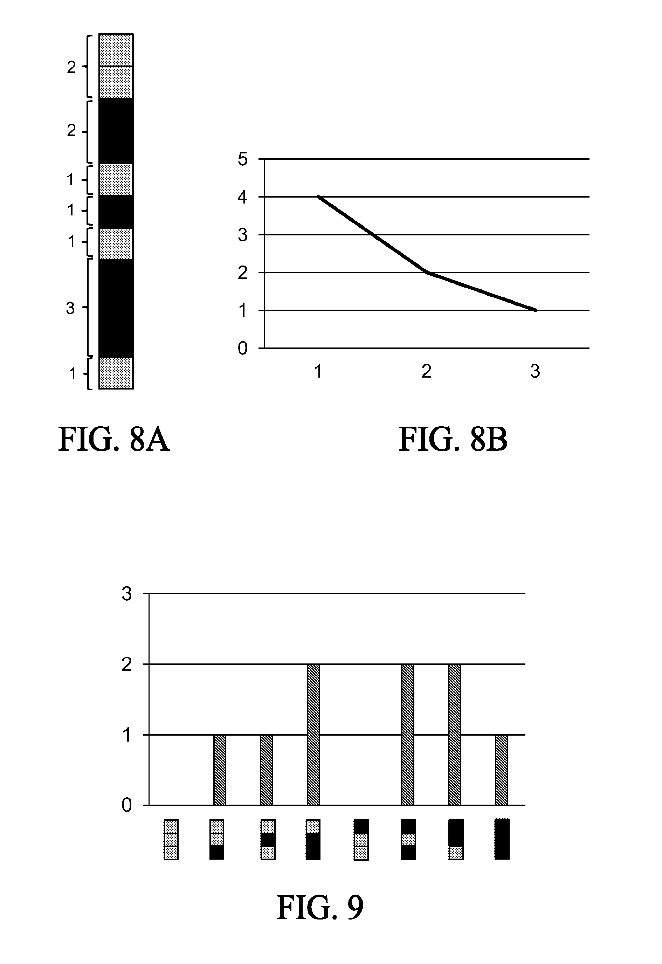

L'étape 15 peut comporter une vérification intra-puits se rapportant à la statistique multipoint parallèlement aux puits. Ceci peut notamment être effectué sur la base de la distribution de séries ("distribution of runs"), comme illustré par les figures 8A-B, ou de la fonction de densité multipoint (MPDF), comme illustré par la figure 9 (cf. l'article précité de J.B. Boisvert, J. Pyrcz et C.V. Deutsch).

La distribution de séries est une mesure statistique de l'étendue verticale des faciès le long d'un puits. Pour chaque faciès, on compte le nombre de blocs consécutifs le long des puits qui présentent ce faciès. Par bloc on entend ici le nombre de couches de la grille réservoir qui ont le faciès considéré à leur intersection avec le puits. Par exemple, le long du puits schématisé sur la figure 8A, il y a 1 série de 3 blocs, 2 séries de 2 blocs et 4 séries de 1 bloc. Les nombres relevés sont notés sur un diagramme tel que celui de la figure 8B, où la taille des séries est portée en abscisses. Le même relevé est effectué le long des colonnes verticales de l'image d'entraînement définie sur la grille régulière de cellules. Les deux diagrammes obtenus sont comparés et la distance entre eux donne une indication de la capacité de l'image d'entraînement à rendre compte de l'étendue verticale des faciès le long des puits. Si la distance est trop grande, l'image d'entraînement pourra être rejetée.

La fonction de densité multipoint (MPDF) est une autre mesure statistique multipoint le long des puits qui peut être estimée à l'étape 15 d'une part d'après les données de puits sur la grille réservoir et d'autre part d'après l'image d'entraînement le long des colonnes verticales de la grille régulière de cellules. La MPDF est un décompte des nombres d'occurrences de différents motifs 1 D de faciès le long des puits. La figure 9 en donne une représentation simplifiée dans le cas de motifs sur trois couches parmi deux types de faciès. Une comparaison des nombres d'occurrence des différents motifs le long des puits et dans l'image d'entraînement permet ainsi d'évaluer la pertinence statistique de l'image d'entraînement en vue de renseigner l'utilisateur ou de rejeter l'image d'entraînement si nécessaire.

L'étape 15 peut en outre comporter une vérification inter-puits dont le but est de vérifier que l'image d'entraînement présente, le long de ses couches I, J, des motifs bidimensionnels de faciès qui correspondent à des motifs bidimensionnels observés dans les puits le long des horizons géologiques Ir, Jr de la grille réservoir.

Pour effectuer cette vérification inter-puits, on commence par identifier des motifs bidimensionnels dans les données de puits. Chaque motif bidimensionnel est défini le long d'un horizon géologique quelconque. Dans une cellule de la grille réservoir où se trouve l'intersection d'un puits avec l'horizon géologique considéré, le motif bidimensionnel contient le type de faciès géologique estimé pour la cellule d'après les logs qui ont été enregistrés dans le puits ou, le cas échéant, d'après l'examen d'échantillons prélevés dans le puits.

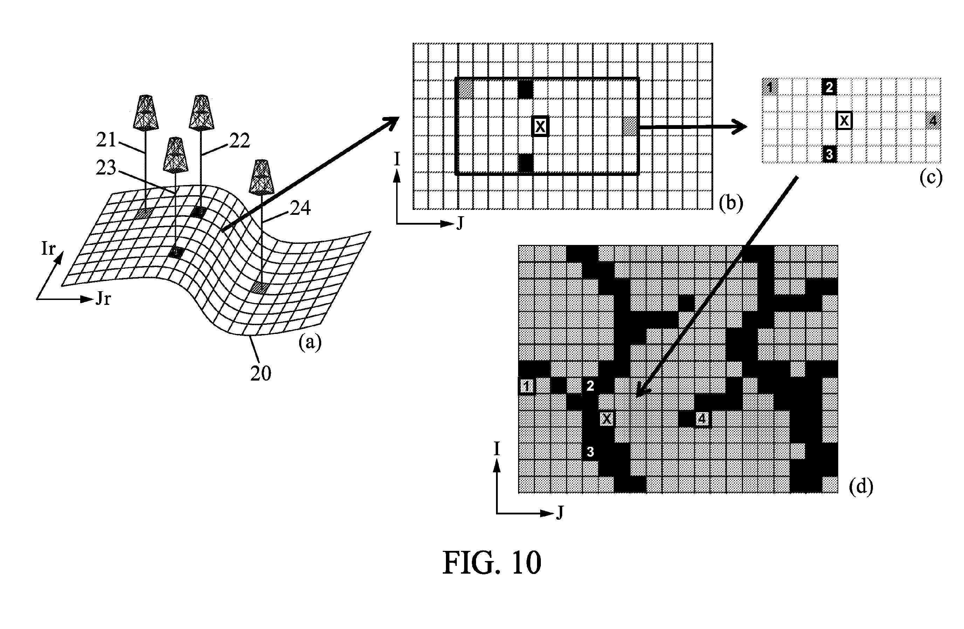

Par exemple, la figure 10(a) montre un horizon sismique 20 de la grille réservoir traversé par quatre puits 21-24. Quatre types de faciès ont été respectivement déterminés sur l'horizon sismique 20 d'après les mesures et prélèvements faits dans les quatre puits 21-24. Ensuite, comme le montre la figure 10(b), l'horizon sismique 20 est "mis à plat" pour réorganiser les index de ces cellules selon la grille régulière I, J en compensant les déformations de l'horizon sismique. Ceci permet d'extraire le motif bidimensionnel sous la forme représentée sur la figure 10(c), où les quatre types de faciès relevés au niveau des puits sont désignés par les numéros 1-4. Ce motif bidimensionnel, composé de plusieurs types de faciès localisés sur les puits, est repéré par la position de la cellule de la grille régulière qui contient le barycentre des quatre puits, marquée par un "X" sur la figure 10(c).

Pour chaque motif bidimensionnel de faciès qui a ainsi été extrait à partir des données de puits, un balayage est effectué pour compter, dans l'image d'entraînement, les occurrences de ce motif bidimensionnel. Pour chaque couche (d'index K) de l'image d'entraînement, le balayage déplace le motif bidimensionnel sur la grille régulière. À chacune des étapes successives de ce déplacement (par exemple l'étape représentée sur la figure 10(d) pour l'une des couches de l'image d'entraînement), la cellule contenant le barycentre X des puits est alignée sur une cellule de référence de la grille de l'image d'entraînement, tandis que les cellules composant le motif bidimensionnel sont alignées sur des cellules-cible de la grille de l'image d'entraînement. Si les types de faciès que comporte l'image d'entraînement dans ces quatre cellules-cible coïncident avec ceux du motif bidimensionnel, un compteur est incrémenté.

À la fin de cette opération, la valeur du compteur est comparée au nombre de positions balayées, et le rapport entre ce compteur et ce nombre sert à évaluer la capacité de l'image d'entraînement à rendre compte des corrélations entre puits le long des horizons sismiques dans le cadre de la vérification inter-puits.

La figure 11 (a) montre un autre exemple, plus complexe, d'horizon sismique 30 traversé par six puits 31-36 forés dans la zone étudiée du sous-sol. La figure 11 (b) montre ce même horizon 30 dont les cellules ont été ré-agencées en disposition régulière, ce qui permet de définir un motif bidimensionnel composé de six types de faciès 41 a, 42b, 43b, 44c, 45a, 46a respectivement placés sur les positions des six puits 31-36 le long de l'horizon, lesquelles positions présentent globalement un barycentre B. Dans les notations utilisées à titre d'illustration sur la figure 11 (b), le suffixe "a" désigne le type de faciès "plaine alluviale" trouvé sur l'horizon au niveau des puits 31, 35 et 36, le suffixe "b" désigne le type de faciès "dépôt sableux" trouvé sur l'horizon au niveau des puits 32 et 33, et le suffixe "c" désigne le type de faciès "chenal" trouvé au niveau du puits 44 dans l'exemple particulier de l'horizon 30 de la figure 11 (a). Ce motif bidimensionnel de six types de faciès trouve une occurrence dans la couche de l'image d'entraînement qui est dessinée sur la figure 11(c) lorsque le barycentre B est positionné comme représenté.

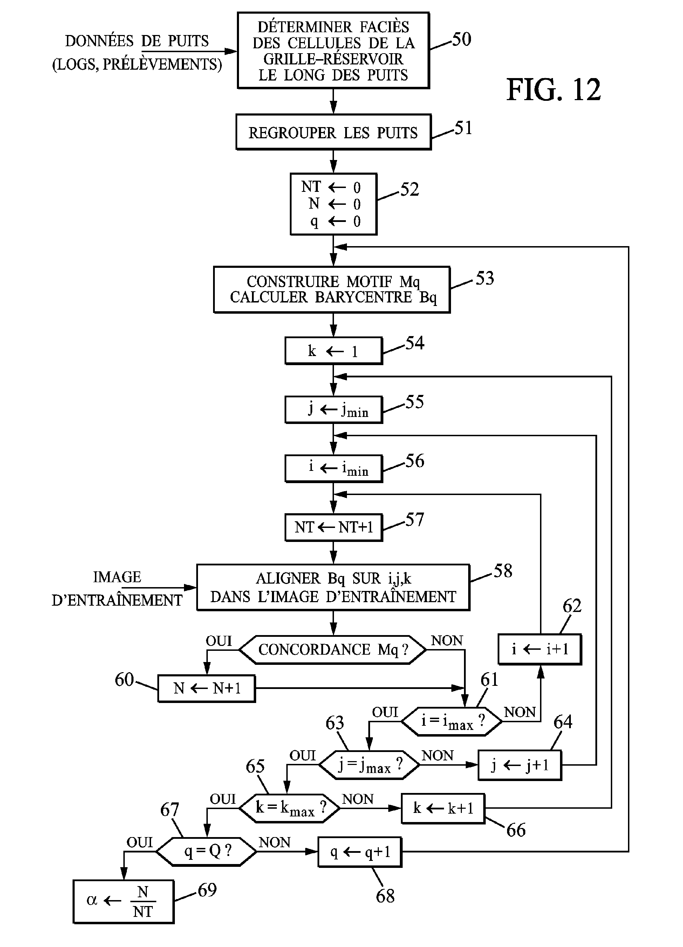

La figure 12 montre un organigramme possible d'une procédure de vérification inter-puits dans un mode de réalisation de l'invention. Dans une première étape 50, les données de puits, pouvant comprendre des logs et/ou des prélèvements de roche, sont analysées pour associer des types de faciès respectifs aux cellules de la grille-réservoir situées le long des puits qui ont été forés dans la zone d'intérêt. L'analyse peut consister à affecter à une cellule particulière le type de faciès majoritaire dans les prélèvements effectués dans cette cellule, ou prendre en compte des mesures physiques réalisées dans le puits. Les types de faciès ainsi positionnés sur les puits pourront ultérieurement servir, à l'étape 18 de la figure 3, à amorcer la simulation MPS.

Ensuite (étape 51), les puits voisins sont regroupés pour former un ou plusieurs groupes composés chacun de M puits (M ≥ 2). Le nombre M peut varier d'un groupe à un autre. L'étape 51 peut être effectuée manuellement par un utilisateur, ou elle peut être en partie automatisée à l'aide d'un critère de distance horizontale entre puits.

Le comptage des occurrences des motifs bidimensionnels est alors initialisé à l'étape 52, par exemple en affectant des valeurs nulles aux compteurs NT et N et la valeur 1 à l'index de motif q. Un motif M_{q} est construit à l'étape 53 de la manière illustrée ci-dessus en référence aux figures 10(c) et 11(b). Le motif M_{q} est composé d'un nombre M de types de faciès disposés sur une grille 2D régulière. Ces types de faciès seront ensuite repérés par leurs positions relatives par rapport au barycentre B_{q}, également calculé à l'étape 53, entre les positions des puits du groupe considéré sur la grille 2D régulière.

Trois boucles imbriquées sont ensuite exécutées pour balayer l'image entraînement en vue d'y détecter les occurrences du motif M_{q} qui vient d'être construit. Ces trois boucles sont successivement initialisées aux étapes 54, 55 et 56 où les index k, j et i sont respectivement initialisés aux valeurs 1, jₘᵢₙ et iₘᵢₙ. L'index k numérote les couches de l'image entraînement, tandis que les index i, j numérotent les cellules suivant les deux dimensions le long des couches. Les valeurs iₘᵢₙ et jₘᵢₙ sont choisies en fonction de la taille du motif M_{q} afin que celui-ci puisse être superposé en totalité sur la couche considérée de l'image d'entraînement. À chaque position d'une cellule de référence i, j, k au cours du balayage, le compteur NT est incrémenté d'une unité à l'étape 57. Puis (étape 58), la position B_{q} du barycentre est alignée sur celle i, j, k de la cellule de référence courante dans l'image d'entraînement, ce qui permet de vérifier à l'étape 59 si le motif M_{q} concorde avec les types de faciès rencontrés dans l'image d'entraînement aux positions des cellules-cible correspondantes. Lorsqu'il y a concordance, une occurrence du motif M_{q} est détectée et le compteur N est incrémenté d'une unité à l'étape 60. Après l'étape 60, ou en cas de non-concordance du motif à l'étape 59, un test de fin de boucle 61 est effectué pour comparer l'index i à sa valeur maximale iₘₐₓ (dépendant à nouveau de la taille du motif M_{q}). Si i < iₘₐₓ, l'index i est incrémenté d'une unité à l'étape 62 et une itération supplémentaire dans la boucle interne est effectuée à partir de l'étape 57. Quand i = iₘₐₓ au test 61, un deuxième test de fin de boucle 63 est effectué pour comparer l'index j à sa valeur maximale jₘₐₓ (dépendant de la taille du motif M_{q}). Si j < jₘₐₓ, l'index j est incrémenté d'une unité à l'étape 64 et une itération supplémentaire est effectuée à partir de l'étape 56. Quand j = jₘₐₓ au test 63, un troisième test de fin de boucle 65 est effectué pour comparer l'index de couche k à sa valeur maximale kₘₐₓ (nombre de couches dans l'image d'entraînement). Si k < kₘₐₓ, l'index de couche k est incrémenté d'une unité à l'étape 66 et une itération supplémentaire est effectuée à partir de l'étape 55 pour balayer la nouvelle couche. Quand k = kₘₐₓ au test 65, il est examiné au test 67 si tous les motifs M_{q} ont été recherchés dans l'image d'entraînement, c'est-à-dire si l'index de motif q est égal au nombre de motifs possibles Q (égal au nombre de groupes retenus à l'étape 51 multiplié par le nombre de couches dans la grille réservoir). Si q < Q, l'index q est incrémenté d'une unité à l'étape 68 et l'algorithme revient à l'étape 53 pour construire le motif suivant. Les balayages de l'image d'entraînement sont terminés quand q = Q au test 67.

À ce stade, les nombres N et NT sont comparés, par exemple en calculant leur rapport α = N/NT à l'étape 69.

La valeur de ce rapport α renseigne sur la probabilité qu'il y a de rencontrer dans l'image d'entraînement les motifs de faciès 2D qui peuvent être déterminés entre puits voisins d'après les mesures. Les valeurs les plus élevées de α permettent de valider l'image d'entraînement de ce point de vue, tandis que les valeurs les plus basses inciteraient plutôt à rejeter l'image d'entraînement. L'évaluation peut comporter la comparaison de α à un seuil prédéfini, par exemple de l'ordre de quelques %. Elle peut aussi consister à présenter à l'utilisateur un score, proportionnel à α, que celui-ci pourra prendre en compte conjointement à d'autres scores, résultant par exemple de vérifications intra-puits du genre de celles illustrées en référence aux figures 8 et 9.

En variante, le rapport α peut être calculé pour chaque groupe de puits formé à l'étape 51. Le seuil de comparaison pour la vérification inter-puits peut dépendre du nombre de puits dans le groupe considéré.

Revenant à la figure 3, lorsque l'image d'entraînement a été validée à l'issue des vérifications intra- et inter-puits de l'étape 15, l'étape suivante 17 consiste à faire en sorte que la connectivité entre les puits soit honorée. Lors de l'exploration d'une région du sous-sol où des puits ont été forés, ou lors de la production d'hydrocarbures dans cette région, les ingénieurs récupèrent des informations dynamiques qui renseignent sur les communications entre puits, permettant des écoulements de fluide entre eux. Ces informations peuvent résulter de test d'interférences ou simplement de l'observation des pressions et écoulements au cours du temps. L'étape 17 a pour objet de prendre en compte ces observations pour initialiser la simulation MPS effectuée à l'étape 18.

Les observations dynamiques fournissent de l'information forte sur les communications entre puits. Ces communications révèlent l'existence de trajets d'écoulement entre les puits, composés de roches relativement perméables. Une bonne prise en compte de la connectivité entre puits améliore beaucoup les simulations d'écoulement.

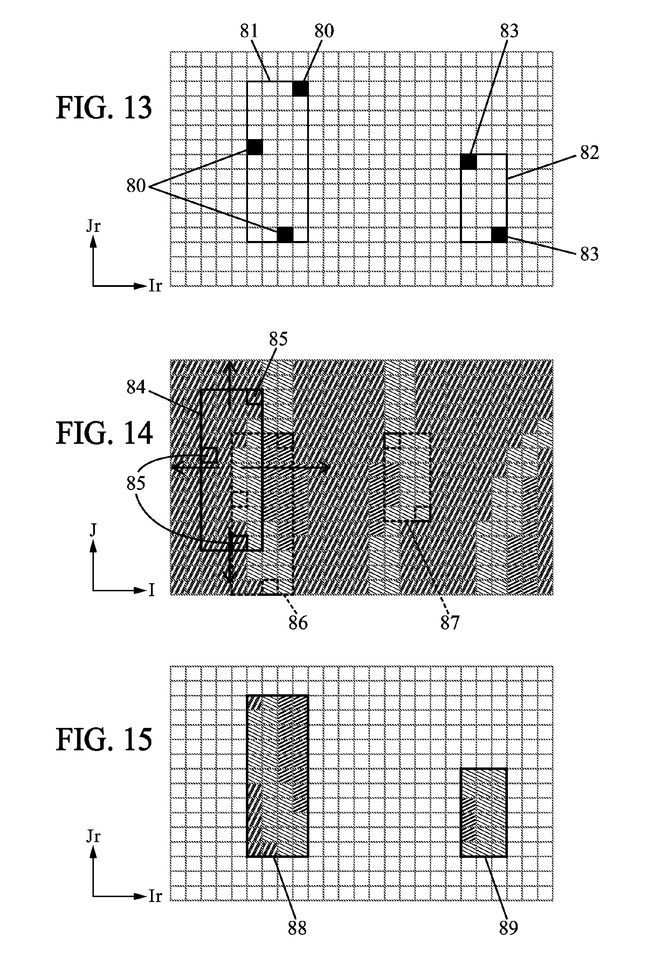

La figure 13 montre, à titre d'exemple, deux groupes de cellules compris dans une même couche de la grille réservoir, à savoir un premier groupe de trois cellules 80 compris dans un ensemble rectangulaire 81 et un deuxième groupe de deux cellules 83 compris dans un ensemble rectangulaire 82. Sur la figure 13, la couche de la grille réservoir est représentée à plat, pour un index de couche Kr constant et des index de position horizontale Ir, Jr variables. Les trois cellules 80 du groupe compris dans l'ensemble rectangulaire 81 sont situées à l'intersection de la couche de la grille réservoir avec les puits d'un groupe de trois puits communicants. De même, les deux cellules 83 du groupe compris dans l'ensemble rectangulaire 82 sont situées à l'intersection de la couche de la grille réservoir avec les puits d'un autre groupe de deux puits communicants.

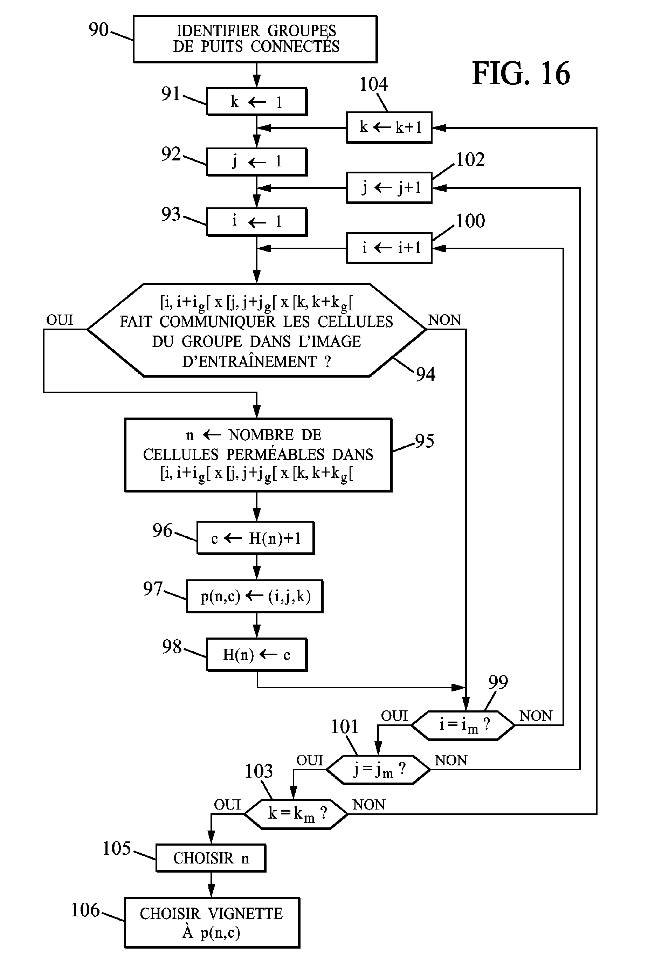

L'identification de tels groupes de puits communicants est effectuée à l'étape 90 représentée sur la figure 16. La connectivité est observée entre différentes cellules appartenant à plusieurs puits du groupe à partir des observations dynamiques faites à l'intérieur de ces puits lorsqu'ils sont testés ou exploités. Pour faciliter la lecture des figures 13-15, les cellules d'un groupe sont représentées comme appartenant à la même couche de la grille réservoir. Toutefois, on comprendra qu'elles peuvent être situées dans des couches différentes, auquel cas les ensembles rectangulaires 81, 82 se généralisent pour devenir des ensembles parallélépipédiques.

Pour un groupe g de cellules de la grille réservoir situées le long de plusieurs puits et entre lesquelles des communications hydrodynamiques ont été observées, on note ig, jg les dimensions horizontales du plus petit ensemble parallélépipédique 81, 82 contenant ces cellules, et kg la dimension verticale de cet ensemble. Dans l'exemple de la figure 13, on a i_{g} = 4, jg = 11, kg = 1 pour l'ensemble 81 et ig = 3, jg = 6, kg = 1 pour l'ensemble 82.

Pour chaque groupe de cellules de la grille réservoir identifié à l'étape 90 de la figure 16 comme faisant communiquer des puits entre eux, le traitement fait référence à une fenêtre rectangulaire 84, ou parallélépipédique si kg > 1, qui parcourt l'image d'entraînement lors du balayage 91-104. La fenêtre rectangulaire 84 représentée sur la figure 14 correspond à l'ensemble rectangulaire 81 de la figure 13. Dans cette fenêtre 84 sont marquées les positions 85 qui correspondent, dans la grille réservoir, aux positions des cellules 80 du groupe identifié à l'étape 90.

Le balayage 91-104 consiste à rechercher des vignettes rectangulaires ou parallélépipédiques compatibles avec le groupe de cellules 80. Ces vignettes compatibles sont des ensembles connexes de cellules de la grille régulière qui remplissent deux conditions:
- présenter dans l'image d'entraînement, aux positions marquées 85 qui correspondent aux cellules 80 du groupe, les mêmes types de faciès respectifs que ceux qui ont été déterminés dans les puits pour ces cellules 80; et
- inclure un sous-ensemble connexe de cellules auquel appartiennent celles qui se trouvent aux positions marquées 85 et présentant dans l'image d'entraînement des types de faciès perméables, c'est-à-dire autorisant un écoulement de fluide entre les cellules du groupe.

On distingue ainsi au moins deux familles de faciès dans la modélisation: une famille de faciès relativement perméables (1^{ère} famille, par exemple faciès chenal ou dépôt sableux)), laissant s'écouler des fluides tels que de l'huile ou du gaz naturel, et une famille de faciès moins perméables (2^{ème} famille). Ce sont les faciès de la 1^{ère} famille qu'il faut trouver dans les sous-ensembles connexes pour accepter une vignette compatible.

Sur la figure 14, les carrés les plus foncés représentent des cellules ayant le faciès de la 2^{ème} famille, tandis que les autres carrés représentent des cellules ayant deux types de faciès de la 1^{ère} famille. La référence 86 montre une position où la fenêtre rectangulaire 84 est alignée sur un ensemble de cellules compatible avec le groupe de cellules 80 de la figure 13, tandis que la référence 87 montre un ensemble de cellules compatible avec le groupe de cellules 83 de la figure 13.

Le balayage 91-104 comporte trois boucles imbriquées successivement initialisées aux étapes 91, 92 et 93 où les index k, j et i sont initialisés à 1. L'index k numérote les couches de l'image entraînement, tandis que les index i, j numérotent les cellules suivant les deux dimensions le long des couches. À chaque position i, j, k au cours du balayage, il est examiné à l'étape 94 si l'ensemble connexe [i, i+i_{g}[ x [j, j+i_{g}[ x [k, k+k_{g}[ couvert dans l'image d'entraînement par la fenêtre, ici en forme de parallélépipède rectangle, fait communiquer entre elles les cellules marquées comme correspondant aux cellules du groupe identifié à l'étape 90, c'est-à-dire si ce parallélépipède rectangle a un sous-ensemble connexe de cellules ayant des types de faciès perméables dans l'image d'entraînement et incluant les cellules marquées. Dans l'affirmative, une vignette (ou patch) compatible en forme de parallélépipède rectangle est détectée dans l'image d'entraînement et le nombre n de cellules de cette vignette [i, i+i_{g}[ x [j, j+i_{g}[ x [k, k+k_{g}[ dont le type de faciès est perméable dans l'image d'entraînement est compté à l'étape 95.

Ce nombre de cellules perméables dans les vignettes compatibles détectées dans l'image d'entraînement fait l'objet d'un calcul d'histogramme. Les valeurs H(1), H(2), ... de l'histogramme H sont initialisées à 0 avant l'étape 91. Après le calcul du nombre n à l'étape 95, l'index c reçoit la valeur H(n)+1 à l'étape 96 et la position courante (i, j, k) du balayage est affectée à un index p(n, c) repérant la position de la c-ième vignette compatible détectée dans l'image d'entraînement (étape 97). L'histogramme est ensuite mis à jour à l'étape 98 en prenant H(n) = c.

Après l'étape 98, ou lorsque le test de compatibilité 94 est négatif, un test de fin de boucle 99 est effectué pour comparer l'index i à sa valeur maximale iₘ (iₘ+i_{g} est la dimension de l'image d'entraînement le long de la direction I). Si i < iₘ, l'index i est incrémenté d'une unité à l'étape 100 et une itération supplémentaire dans la boucle interne est effectuée à partir de l'étape 94. Quand i = iₘ au test 99, un deuxième test de fin de boucle 101 est effectué pour comparer l'index j à sa valeur maximale jₘ (jₘ+j_{g} est la dimension de l'image d'entraînement le long de la direction J). Si j < jₘ, l'index j est incrémenté d'une unité à l'étape 102 et une itération supplémentaire est effectuée à partir de l'étape 93. Quand j = jₘ au test 101, un troisième test de fin de boucle 103 est effectué pour comparer l'index de couche k à sa valeur maximale kₘ (kₘ+k_{g} est la dimension de l'image d'entraînement le long de la direction K). Si k < kₘ, l'index de couche k est incrémenté d'une unité à l'étape 104 et une itération supplémentaire est effectuée à partir de l'étape 91. Quand k = kₘ au test 103, le balayage de l'image d'entraînement est terminé.

L'histogramme H(n) pour le groupe de puits considéré est alors complété. Il donne le nombre de vignettes compatibles trouvées lors du balayage pour chaque nombre n de cellules perméables. Il peut être exprimé de façon équivalente en termes de volume de faciès perméable (en multipliant n par le volume élémentaire d'une cellule) ou en termes de proportion de faciès perméable (en divisant n par igxjgxkg). Cet histogramme peut être exploité pour sélectionner une vignette compatible qui sera appliquée à l'initialisation de la simulation MPS pour honorer la connectivité inter-puits.

Dans l'exemple de la figure 16, le balayage de l'image d'entraînement pour un groupe de puits connectés est suivi par une étape 105 de choix d'un nombre n (ou de façon équivalente d'un volume de faciès perméable, ou d'une proportion de faciès perméable). Ce choix est effectué en fonction de la statistique révélée par l'histogramme H(n). On peut par exemple choisir pour n la valeur moyenne ou la médiane de la distribution donnée par l'histogramme H(n). Le choix peut aussi tenir compte d'un scénario retenu pour exécuter la simulation MPS de l'étape 18. Par exemple, un scénario optimiste peut favoriser le choix d'un nombre n relativement élevé, tandis qu'un scénario pessimiste peut favoriser le choix d'un nombre n relativement bas.

À l'étape 106, une vignette compatible est choisie, par exemple par tirage au sort parmi les vignettes détectées avec la proportion de faciès perméable retenue à l'étape 105. Ceci peut consister à tirer au sort un nombre c et à prendre la vignette sélectionnée à la position p(n, c) dans l'image d'entraînement.

Pour initialiser la simulation MPS de l'étape 18 (figure 3), une image d'initialisation est construite sur la grille réservoir en y plaçant:
- dans les cellules situées le long d'un puits, les types de faciès qui ont été déterminés par les mesures ou prélèvements effectués dans ce puits;
- dans les cellules situées dans les rectangles ou parallélépipèdes correspondant à un groupe de puits connectés identifié à l'étape 90, les types de faciès rencontrés dans l'image d'entraînement dans les cellules correspondantes de la vignette sélectionnée pour ce groupe.

La figure 15 montre une partie de l'image d'initialisation correspondant aux figures 13 et 14. Cette image d'initialisation définie sur la grille réservoir comporte (i) une vignette 88 correspondant à la vignette 86 de la figure 14 calée sur la position du groupe de trois cellules 80 compris dans l'ensemble rectangulaire 81 de la figure 13 et (ii) une autre vignette 89 correspondant à la vignette 87 de la figure 14 calée sur la position du groupe de deux cellules 83 compris dans l'ensemble rectangulaire 82 de la figure 13.

À l'étape 18, la simulation MPS est effectuée pour construire, sur la grille réservoir, l'image modélisant la zone étudiée du sous-sol. La simulation MPS procède, de façon connue en soi, par propagation à partir de l'image d'initialisation en utilisant l'image d'entraînement comme référence statistique.

La simulation MPS et la préparation préalable des images d'entraînement peuvent être mises en oeuvre à l'aide d'un ou plusieurs ordinateurs. Chaque ordinateur peut comprendre une unité de calcul de type processeur, une mémoire pour stocker des données, un système de stockage permanent tel qu'un ou plusieurs disques durs, des ports de communication pour gérer des communications avec des dispositifs externes, notamment pour récupérer les images satellites et les données de puits, et des interfaces utilisateurs comme par exemple un écran, un clavier, une souris, etc.

Typiquement, les calculs et les étapes du précédé décrit ci-dessus sont exécutés par le ou les processeurs en utilisant des modules logiciels qui peuvent être stockés, sous forme d'instructions de programmes ou de code lisible par l'ordinateur et exécutable par le processeur, sur un support d'enregistrement lisible par ordinateur tel qu'une mémoire lecture seule (ROM), une mémoire à accès aléatoire (RAM), des CD-ROMs, des bandes magnétiques, des disquettes et des dispositifs optiques de stockage de données.

Les modes de réalisation décrits ci-dessus sont des illustrations de la présente invention. Diverses modifications peuvent leur être apportées sans sortir du cadre de l'invention qui ressort des revendications annexées.

## Revendications

1. Procédé de préparation d'une image d'entraînement pour la modélisation d'une zone du sous-sol par une technique géostatistique multipoint, le procédé comprenant:
- construire une image d'entraînement sur une première grille de cellules tridimensionnelle, l'image d'entraînement donnant, pour chaque cellule de la première grille, un type respectif de faciès géologique affecté à ladite cellule; et
- vérifier la représentativité de l'image d'entraînement par rapport à des données de puits obtenues à partir d'observations faites dans plusieurs puits qui ont été forés dans la zone du sous-sol, les données de puits faisant référence à une seconde grille de cellules tridimensionnelle dont la morphologie est adaptée à des horizons géologiques estimés dans la zone du sous-sol, les données de puits incluant des types de faciès géologique respectivement estimés d'après les observations pour des cellules de la seconde grille situées le long des puits,
**caractérisé en ce que** la vérification de représentativité de l'image d'entraînement par rapport aux données de puits comporte une vérification inter-puits comprenant:
- identifier des motifs bidimensionnels dans les données de puits, chaque motif bidimensionnel étant défini le long d'un horizon géologique respectif et incluant, dans une cellule contenant l'intersection d'un puits avec ledit horizon géologique dans la seconde grille, le type de faciès géologique estimé pour ladite cellule; et
- compter, dans l'image d'entraînement, les occurrences des motifs bidimensionnels identifiés.

2. Procédé selon la revendication 1, dans lequel la vérification inter-puits comprend en outre:
- valider l'image d'entraînement lorsque le nombre des occurrences comptées des motifs bidimensionnels identifiés dépasse un seuil.

3. Procédé selon la revendication 2, dans lequel ledit seuil est exprimé proportionnellement au nombre de positions possibles du motif bidimensionnel dans l'image d'entraînement.

4. Procédé selon l'une quelconque des revendications précédentes, dans lequel chaque motif bidimensionnel, défini pour des puits croisant un horizon géologique, est repéré par la position de la cellule de la seconde grille tridimensionnelle contenant le barycentre desdits puits le long dudit horizon géologique.

5. Procédé selon la revendication 4, dans lequel le comptage, dans l'image d'entraînement, des occurrences d'un motif bidimensionnel repéré par la position d'une cellule de barycentre comprend:
- balayer l'image d'entraînement, chaque étape du balayage plaçant le motif bidimensionnel sur la première grille en alignant la cellule contenant le barycentre des puits sur une cellule de référence de la première grille et les cellules du motif bidimensionnel contenant respectivement les intersections entre les puits et l'horizon géologique sur des cellules-cible de la première grille; et
- incrémenter un compteur chaque fois qu'une étape du balayage fait coïncider les types de faciès estimés pour les cellules du motif bidimensionnel avec les types de faciès respectivement affectés aux cellules-cible dans l'image d'entraînement.

6. Procédé selon l'une quelconque des revendications précédentes, dans lequel la vérification de représentativité de l'image d'entraînement par rapport aux données de puits comporte en outre une vérification intra-puits comprenant:
- estimer une mesure statistique multipoint le long de chaque puits parmi les données de puits;
- estimer la même mesure statistique multipoint le long de colonnes verticales de la première grille de cellules; et
- comparer les deux mesures statistiques multipoint estimées.

7. Procédé selon la revendication 6, dans lequel la mesure statistique multipoint estimée est une fonction de densité multipoint (MPDF) ou une distribution de séries ("distribution of runs").

8. Système de traitement de données adapté à la préparation d'une image d'entraînement pour la modélisation d'une zone du sous-sol par une technique géostatistique multipoint, le système comprenant des ressources informatiques configurées pour mettre en oeuvre un procédé selon l'une quelconque des revendications précédentes.

9. Programme d'ordinateur pour un système de traitement de données, le programme comprenant des instructions pour mettre en oeuvre un procédé selon l'une quelconque des revendications 1 à 7 lorsqu'il est exécuté sur une unité de calcul du système de traitement de données.

10. Support d'enregistrement lisible par ordinateur, sur lequel est enregistré un programme selon la revendication 9.

## Patentansprüche

1. Verfahren zur Überprüfung eines Trainingsbildes zur Modellierung einer Untergrundzone durch eine geostatistische Mehrpunkttechnik, wobei das Verfahren umfasst:
- Erzeugen eines Trainingsbildes auf einem ersten Gitter von dreidimensionalen Zellen, wobei das Trainingsbild für jede Zelle des ersten Gitters einen jeweiligen Typ von geologischer Fazies für die Zelle zugeteilt ergibt; und
- Verifizieren der Repräsentativität des Trainingsbildes bezüglich Daten aus Schächten, welche ausgehend von in einer Mehrzahl von Schächten gemachten Beobachtungen erhalten werden, welche in der Untergrundzone gebohrt worden sind, wobei die Daten aus Schächten sich auf ein zweites Gitter von dreidimensionalen Zellen beziehen, in welchem die Morphologie auf geschätzte geologische Horizonte in der Untergrundzone angepasst ist, wobei die Daten aus Schächten Typen von geologischen Fazies umfassen, welche jeweils nach den Beobachtungen für die Zellen des zweiten Gitters geschätzt worden sind, welche sich entlang der Schächte befinden,
**dadurch gekennzeichnet, dass** die Verifizierung der Repräsentativität des Trainingsbildes bezüglich Daten aus Schächten eine Verifizierung zwischen Schächten umfasst, welche umfasst:
- Identifizieren von zweidimensionalen Mustern in den Daten aus Schächten, wobei jedes zweidimensionale Muster entlang eines jeweiligen geologischen Horizonts definiert ist und in einer Zelle, welche eine Überschneidung eines Schachts mit dem geologischen Horizont in dem zweiten Gitter umfasst, den geschätzten Typ der geologischen Fazies für diese Zelle umfasst; und
- Zählen der Vorkommen der identifizierten zweidimensionalen Muster in dem Trainingsbild.

2. Verfahren nach Anspruch 1, wobei die Verifizierung zwischen Schächten ferner umfasst:
- Validieren des Trainingsbildes, wenn die Anzahl der gezählten Vorkommen der identifizierten zweidimensionalen Muster einen Schwellenwert übersteigt.

3. Verfahren nach Anspruch 2, wobei der Schwellenwert proportional zu der Anzahl von möglichen Positionen des zweidimensionalen Musters in dem Trainingsbild ausgedrückt wird.

4. Verfahren nach einem der vorhergehenden Ansprüche, wobei jedes zweidimensionale Muster, welches für einen geologischen Horizont überschneidende Schächte definiert ist, durch die Position der Zelle des zweiten dreidimensionalen Gitters aufgefunden wird, welche das Baryzentrum der Schächte entlang dem geologischen Horizont enthält.

5. Verfahren nach Anspruch 4, wobei die Zählung der Vorkommen eines zweidimensionalen Musters in dem Trainingsbild, welches durch die Position einer Baryzentrum-Zelle aufgefunden wird, umfasst:
- Durchsuchen des Trainingsbildes, wobei jeder Schritt des Durchsuchens das zweidimensionale Muster auf dem ersten Gitter platziert, indem die Zelle, welche das Baryzentrum der Schächte enthält, auf eine Referenzzelle des ersten Gitters ausgerichtet wird und die Zellen des zweidimensionalen Musters, die jeweils die Überschneidungen zwischen den Schächten und dem geologischen Horizont enthalten, auf Zielzellen des ersten Gitters ausgerichtet werden; und
- Erhöhen eines Zählers jedes Mal, wenn ein Schritt des Durchsuchens dazu führt, dass die geschätzten Typen der Fazies für die Zellen des zweidimensionalen Musters mit den jeweiligen Typen der Fazies zusammenfallen, welche für die Zielzellen in dem Trainingsbild bestimmt worden sind.

6. Verfahren nach einem der vorhergehenden Ansprüche, wobei das Verifizieren der Repräsentativität des Trainingsbildes bezüglich der Daten aus Schächten ferner ein Verifizieren zwischen Schächten umfasst, umfassend:
- Schätzen einer statistischen Mehrpunkt-Größe entlang jedem Schacht aus den Daten aus Schächten;
- Schätzen der gleichen statistischen Mehrpunkt-Größe entlang vertikalen Spalten des ersten Gitters aus Zellen; und
- Vergleichen der beiden geschätzten statistischen Merhpunkt-Größen.

7. Verfahren nach Anspruch 6, wobei die geschätzte statistische Mehrpunkt-Größe eine Mehrpunkt-Dichtefunktion (MPDF) oder eine Serienverteilung ("distribution of runs") ist.

8. System zur Datenverarbeitung, welches dazu eingerichtet ist, ein Trainingsbild zur Modellierung einer Untergrundzone durch eine geostatistische Mehrpunkttechnik zu erzeugen, wobei das System Datenverarbeitungsmittel umfasst, welche dazu eingerichtet sind, ein Verfahren nach einem der vorhergehenden Ansprüche durchzuführen.

9. Computerprogramm für ein System zur Datenverarbeitung, wobei das Programm Anweisungen zum Durchführen eines Verfahrens nach einem der Ansprüche 1 bis 7 umfasst, wenn es auf einer Rechnereinheit des Systems zur Datenverarbeitung ausgeführt wird.

10. Computerlesbares Speichermedium, auf welchem ein Programm nach Anspruch 9 gespeichert ist.

## Claims

1. A method for preparing a training image for modeling an area of the subsoil by a multipoint geostatistical technique, the method comprising:
- constructing a training image on a first three-dimensional grid of cells, the training image giving, for each cell of the first grid, a respective type of geological facies assigned to said cell; and
- verifying representativeness of the training image with respect to well data obtained from observations conducted in a plurality of wells drilled in the area of the subsoil, the well data referring to a second three-dimensional grid of cells having a morphology adapted to estimated geological horizons in the area of the subsoil, the well data including the types of geological facies that are respectively estimated from the observations for the cells of the second grid located along the wells,
**characterized in that** the verification of representativeness of the training image with respect to the well data includes an inter-well verification which comprises:
- identifying two-dimensional patterns in the well data, each two-dimensional pattern being defined along a respective geological horizon and including, in a cell containing an intersection of a well with said geological horizon in the second grid, the type of geological facies estimated for said cell; and
- counting, in the training image, occurrences of the two-dimensional patterns identified.

2. The method as claimed in claim 1, wherein the inter-well verification further comprises:
- validating the training image when the counted number of occurrences of the identified two-dimensional patterns exceeds a threshold.

3. The method as claimed in claim 2, wherein said threshold is expressed in proportion to a number of possible positions of the two-dimensional pattern in the training image.

4. The method as claimed in any one of the preceding claims, wherein each two-dimensional pattern defined for wells intersecting a geological horizon has a position identified by the position of the cell of the second three-dimensional grid containing a centroid of said wells along said geologic horizon.

5. The method as claimed in claim 4, wherein the counting, in the training image, of the occurrences of a two-dimensional pattern positionally identified by the position of a centroid cell comprises:
- scanning the training image, each scanning step placing the two-dimensional pattern on the first grid by aligning the cell containing the centroid of the wells over a reference cell of the first grid and the cells of the two-dimensional pattern respectively containing the intersections between the wells and the geological horizon over target cells of the first grid; and
- incrementing a counter each time a scanning step results in the types of facies estimated for the cells of the two-dimensional pattern coinciding with the types of facies respectively assigned to the target cells in the training image.

6. The method as claimed in any one of the preceding claims, wherein the verification of representativeness of the training image with respect to the well data further comprises an intra-well verification comprising:
- estimating a multipoint statistical measurement along each well in the well data;
- estimating the same multipoint statistical measurement along vertical columns of the first grid of cells; and
- comparing the two estimated multipoint statistical measurements.

7. The method as claimed in claim 6, wherein the estimated multipoint statistical measurement is a multipoint density function (MPDF) or a distribution of runs.

8. A data processing system suitable for preparing a training image for modeling an area of the subsoil by a multipoint geostatistical technique, said system comprising computer resources configured to implement a method as claimed in any one of the preceding claims.

9. A computer program for a data processing system, said program comprising instructions for implementing a method as claimed in any one of claims 1 to 7 when run on a processing unit of the data processing system.

10. A computer-readable storage medium, on which is stored a program as claimed in claim 9.
